# EUROPEAN PATENT SPECIFICATION

(11) **EP 2 257 867 B1**
(45) Date of publication and mention of the grant of the patent: **03.04.2013**
(21) Application number: 09713547.9
(22) Date of filing: 09.01.2009
(51) Int. Cl.: G06F 3/048

(54) **APPARTATUS, METHOD AND COMPUTER PROGRAM PRODUCT FOR MANIPULATING A REFERENCE DESIGNATOR LISTING**
VORRICHTUNG, VERFAHREN UND COMPUTERPROGRAMMPRODUKT ZUM MANIPULIEREN EINER REFERENZKENNUNGSAUFLISTUNG
APPAREIL, PROCÉDÉ ET PRODUIT DE PROGRAMME INFORMATIQUE POUR MANIPULER UNE LISTE DE DÉSIGNATEURS DE RÉFÉRENCE

(30) Priority: 18.02.2008 US 32842
(43) Date of publication of application: 08.12.2010
(73) Proprietor: Nokia Corporation, 02150 Espoo (FI)
(72) Inventor: KRAFT, Christian Rossing, DK-1814 Frederiksberg C (DK)
(74) Representative: Derry, Paul Stefan
(86) International application number: PCT/IB2009/000028
(87) International publication number: WO 2009/104064

(56) References cited:
- EP-A- 1 847 915
- WO-A-00/75766
- WO-A-99/54807
- US-A1- 2007 132 789
- US-B1- 7 075 512

## Description

### FIELD

Embodiments of the invention relate, generally, to touch sensitive input devices such as touchscreens and, in particular, to manipulating reference designator listings displayed on a touchscreen.

### BACKGROUND

Some electronic devices (e.g., cellular telephones, personal digital assistants (PDAs), laptops, etc.) having a touch sensitive input device, such as a touchscreen or touch display, may provide a reference designator listing that displays a number of reference designators that can be used to jump to a particular location within an ordered content listing. For example, a character bar including each of the letters of the alphabet may be displayed, wherein a user can jump to an approximate location in an alphabetized content list (e.g., an alphabetized list of contacts) by touching the character bar around the location at which the desired letter is displayed.

In many instances, however, the reference designator listing (e.g., alphabetized character bar) may include so many reference designators that given the relatively small size of many electronic devices and, as a result, the small size of the touchscreen, the reference designators themselves may be relatively small. This may make it difficult, if not impossible, for a user to touch the exact reference designator he or she desires. Instead, the user may accidentally touch multiple reference designators at one time. For example, a user may intend to select the letter "F" from an alphabetized character bar associated with a listing of his or her music files and instead touch the touchscreen at the location at which the "E," "F," and may be even "G" characters are displayed.

When this occurs, the electronic device may have to guess which reference designator the user intended to select and then base its movement within the ordered content list on this guess. For example, continuing with the above example, the electronic device may incorrectly guess that the user intended to select the letter "E," and, in response, display the music files that begin with the letter "E," and not those that begin with the letter "F," as desired by the user. At this point, the user may be able to scroll through the actual content listing in order to get to the items in which he or she is interested (e.g., scroll down to the music files starting with the letter "F"), but this process can be overly cumbersome.

A need, therefore, exists for a way to manipulate the reference designator listing in a way that improves its usability.

WO 00/75766 A1 describes a self-service terminal comprising a screen for displaying a plurality of selectable options, and touch sensing means for detecting an area of the screen that is in contact with a probe. The terminal further comprises control means responsive to the touch sensing means for displaying on the screen an enlarged image of at least the area in contact with the probe to assist selection of a selectable option by a user.

WO 99/54807 A1 describes a touch screen having an entire collection of icons displayed at a scale in which the individual function of each icon is recognizable, but too small to easily access features of the function, and wherein upon touching the screen area accommodating an area of the icon, the screen provides a zoomed in version of that area so that the user can select a desired feature.

US2007/132789 describes a user interface in which movement of a point of contact by a user over an index on a touch-sensitive display is determined. The displayed index has a sequence of index items. In response to the movement, a list of information items on the touch-sensitive display is scrolled. The list of information items may include a sequence of information item subsets corresponding to the sequence of index items. The scrolling may include scrolling through a respective information item subset if the point of contact moves over a corresponding respective index item.

### BRIEF SUMMARY

The invention is defined by the claims.

In general, examples described in this specification provide an improvement by, among other things, providing a reference designator listing that is capable of being zoomed and scrolled. In particular, according to one embodiment of the present invention, a reference designator listing may be displayed on an electronic device (e.g., cellular telephone, personal digital assistant (PDA), laptop, etc.) touchscreen or touch display in association with an ordered content list. For example, a character bar including a list of the letters of the alphabet may be displayed in association with an alphabetized list of contacts, music files, video files, or the like. When the user touches the touchscreen proximate the location at which one or more of the reference designators of the reference designator listing are displayed, the electronic device may not only jump to the portion of the content list corresponding to the reference designator it is assumed that the user selected, but it may also zoom the reference designator listing so that the selected reference designators, and one or more surrounding reference designators, are larger and can be more easily selected by the user. In this manner, if the reference designator it was assumed the user intended to select is not, in fact, the reference designator the user wanted to select, the user can re-select the magnified version of the reference designator. In addition, according to another embodiment of the present invention, by touching the touchscreen at a location at which the magnified reference designator listing is displayed and moving his or her finger, stylus, pen, pencil, or other selection device, in some direction within the displayed reference designator listing, the user may further be able to scroll the reference designator listing, so that a different set of magnified reference designators is displayed.

In one example, an apparatus for manipulating a reference designator listing is described. The apparatus may include a processor configured to: (1) cause a reference designator listing including a plurality of ordered reference designators to be displayed on the touch sensitive input device; (2) detect a tactile input on the touch sensitive input device proximate a location at which a first reference designator of the reference designator listing is displayed; (3) cause a magnified reference designator listing to be displayed, in response to detecting the tactile input, wherein the magnified reference designator listing includes a set of magnified reference designators including a magnified version of the first reference designator and of one or more reference designators surrounding the first reference designator; and (4) cause a portion of an ordered content list to be displayed, in response to detecting the tactile input, wherein the portion includes one or more ordered content elements corresponding to at least one of the magnified reference designators of the set of magnified reference designators.

The processor may be further configured to detect a tactile input on the touch sensitive input device proximate a location at which a first magnified reference designator of the set of magnified reference designators is displayed, and further to detect a movement of the tactile input in a first direction. In response, the processor may be configured to translate the magnified reference designator listing, such that the magnified reference designator listing includes a different set of magnified reference designators including a magnified version of one or more reference designators of the reference designator listing located in the opposite direction from the first magnified reference character than the first direction.

In another example, a method for manipulating a reference designator listing is described. The method may include: (1) causing a reference designator listing including a plurality of ordered reference designators to be displayed on the touch sensitive input device; (2) detecting a tactile input on the touch sensitive input device proximate a location at which a first reference designator of the reference designator listing is displayed; (3) causing a magnified reference designator listing to be displayed, in response to detecting the tactile input, wherein the magnified reference designator listing includes a set of magnified reference designators including a magnified version of the first reference designator and of one or more reference designators surrounding the first reference designator; and (4) causing a portion of an ordered content list to be displayed, in response to detecting the tactile input, wherein the portion includes one or more ordered content elements corresponding to at least one of the magnified reference designators of the set of magnified reference designators.

In yet another example, a computer program product for manipulating a reference designator listing is described. The computer program product contains at least one computer-readable storage medium having computer-readable program code portions stored therein. The computer-readable program code portions of one embodiment include: (1) a first executable portion for causing a reference designator listing including a plurality of ordered reference designators to be displayed on the touch sensitive input device; (2) a second executable portion for detecting a tactile input on the touch sensitive input device proximate a location at which a first reference designator of the reference designator listing is displayed; (3) a third executable portion for causing a magnified reference designator listing to be displayed, in response to detecting the tactile input, wherein the magnified reference designator listing includes a set of magnified reference designators including a magnified version of the first reference designator and of one or more reference designators surrounding the first reference designator; and (4) a fourth executable portion for causing a portion of an ordered content list to be displayed, in response to detecting the tactile input, wherein the portion includes one or more ordered content elements corresponding to at least one of the magnified reference designators of the set of magnified reference designators.

In another example, an apparatus for manipulating a reference designator listing is described. The apparatus may include: (1) means for causing a reference designator listing including a plurality of ordered reference designators to be displayed on the touch sensitive input device; (2) means for detecting a tactile input on the touch sensitive input device proximate a location at which a first reference designator of the reference designator listing is displayed; (3) means for causing a magnified reference designator listing to be displayed, in response to detecting the tactile input, wherein the magnified reference designator listing includes a set of magnified reference designators including a magnified version of the first reference designator and of one or more reference designators surrounding the first reference designator; and (4) means for causing a portion of an ordered content list to be displayed, in response to detecting the tactile input, wherein the portion includes one or more ordered content elements corresponding to at least one of the magnified reference designators of the set of magnified reference designators.

### BRIEF DESCRIPTION OF THE SEVERAL VIEWS OF THE DRAWING(S)

Having thus described embodiments of the invention in general terms, reference will now be made to the accompanying drawings, which are not necessarily drawn to scale, and wherein:
Figure 1 illustrates a touchscreen before and after the user has manipulated a displayed reference designator listing in accordance with embodiments of the present invention;
Figure 2 is a schematic block diagram of an entity capable of operating as an electronic device in accordance with embodiments of the present invention;
Figure 3 is a schematic block diagram of a mobile station capable of operating in accordance with an embodiment of the present invention; and
Figure 4 is a flow chart illustrating the process of manipulating a reference designator listing in accordance with embodiments of the present invention.

### DETAILED DESCRIPTION

Embodiments of the present invention now will be described more fully hereinafter with reference to the accompanying drawings, in which some, but not all embodiments of the inventions are shown. Indeed, embodiments of the invention may be embodied in many different forms and should not be construed as limited to the embodiments set forth herein; rather, these embodiments are provided so that this disclosure will satisfy applicable legal requirements. Like numbers refer to like elements throughout.

### Overview:

In general, embodiments of the present invention provide an apparatus, method and computer program product for manipulating a reference designator listing. In particular, embodiments of the present invention provide a reference designator listing that is capable of being zoomed and scrolled. According to one embodiment, in order to navigate through an ordered content list (e.g., an alphabetized list of contacts, a chronological list of music files, a list of images in order by the continent, country, state, city, or the like, in which they were captured, etc.), a reference designator listing may be displayed on the electronic device touchscreen or touch display in association with the ordered content list. The reference designator listing may include a list of reference designators that can be selected in order to jump to different portions of the ordered content list. For example, the reference designator listing may include a list of the letters of the alphabet for navigating through an alphabetized list of contacts, music and/or video files, or the like. As another example, the reference designator listing may include a list of dates that can be used in order to navigate through a chronological list of music, video and/or image files, or the like. In the above examples, the reference designators refer to the characters and the dates included in the reference designator listing.

When the user touches the touchscreen proximate the location at which one or more of the reference designators of the reference designator listing are displayed, the electronic device may jump to the portion of the content list corresponding to the reference designator it is assumed that the user selected. In particular, as noted above, given the relatively small size of many electronic devices and, as a result, the relatively small size of many touchscreens, and further given the number of references designators that are often displayed at one time, it is often very difficult for a user to touch only one of the reference designators. Instead, the user may touch multiple reference designators including the one he or she intended to select. This may be particularly true when the user is using his or her finger, the size of which may be as much as ½ inch in diameter, to touch the electronic device touchscreen. As a result, the electronic device may have to guess, to some extent, which reference designator the user intended to select and then jump to the portion of the content list that corresponds to that reference designator.

According to embodiments of the present invention, however, in addition to moving the content list to the content elements that correspond to the reference designator it is assumed the user intended to select, the electronic device may further enlarge the reference designator listing so that a magnified version of the reference designator it was assumed the user selected, as well as a magnified version of the one or more surrounding reference designators, are shown (i.e., zoom in on the assumed-selected reference designator and its neighbors). In this manner, if the user did not in fact intend to select the reference designator it was assumed he intended to select, he or she may be able to more easily re-select the now magnified version of the desired reference designator, causing the content list to jump to the content elements that correspond to that reference designator. Given the enlarged size of the magnified reference designator, it becomes less likely that the user will touch more than one reference designator, even if he or she is using his or her finger.

In addition, according to another embodiment of the present invention, the user may further scroll the magnified reference designator listing, so that he or she can have access to the magnified version (and, therefore, more easily selectable version) of additional reference designators. In particular, by touching the touchscreen somewhere where the magnified reference designator listing is displayed and then moving his or her finger, stylus, pen, pencil, or other selection device, in some direction within the displayed reference designator listing, the user may be able to scroll the reference designator listing, so that a different set of magnified reference designators is displayed.

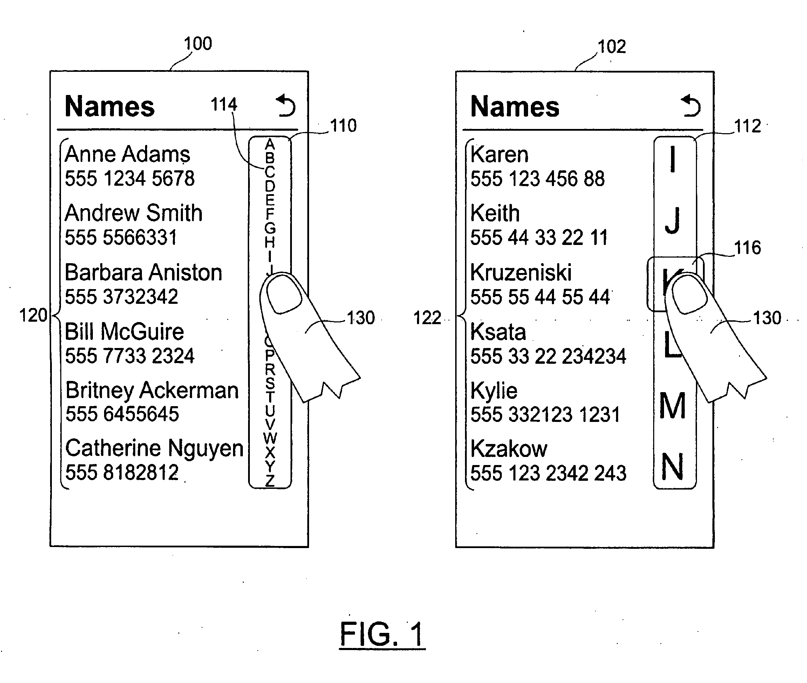

To illustrate the foregoing embodiments, reference is made to Figure 1, which shows an electronic device touchscreen displaying a reference designator listing before and after it is magnified in response to the user touching the electronic device touchscreen. As one of ordinary skill in the art will recognize, the example shown in Figure 1 provides but one example of a reference designator listing and corresponding ordered content list that may be used in association with embodiments of the present invention. Other types of reference designators and ordered content lists may likewise be used without departing from the spirit and scope of embodiments of the present invention. As a result, the foregoing description should not in any way be taken as limiting the embodiments of the present invention to the particular examples provided.

As shown, the touchscreen **100** may display a reference designator listing **110** including an alphabetized list of each of the letters of the alphabet **114,** referred to hereinafter as a "character bar." When the user selects a letter from the character bar (e.g., by touching the touchscreen **100** using his or her finger **130** around the location where the letter is displayed), the corresponding alphabetized list of contacts **120,** which is also displayed on the touchscreen **100,** may jump to the contacts that correspond to the selected letter. In particular, as shown by touchscreen **102,** when the user touches the touchscreen **100** near the location at which the letter "K" is displayed in the character bar **110,** the list of contacts displayed may jump to the contacts whose names begin with the letter "K" **122.** In addition, a magnified version of the character bar **112** may be displayed, wherein the magnified character bar **112** may include a magnified version of the letter the electronic device assumed the user selected **116** (e.g., "K"), as well as the magnified version of one or more surrounding letters (e.g., "I," "J," "L," "M," and "N"). As can be seen, if the user had actually intended to select another letter (e.g., "I"), he or she can now very easily do so using the magnified character bar **112.** The user may further scroll the magnified character bar **112** by touching the touchscreen **102** somewhere where the magnified character bar **112** is displayed, and then moving his or her finger, in this instance, up or down.

### Electronic Device:

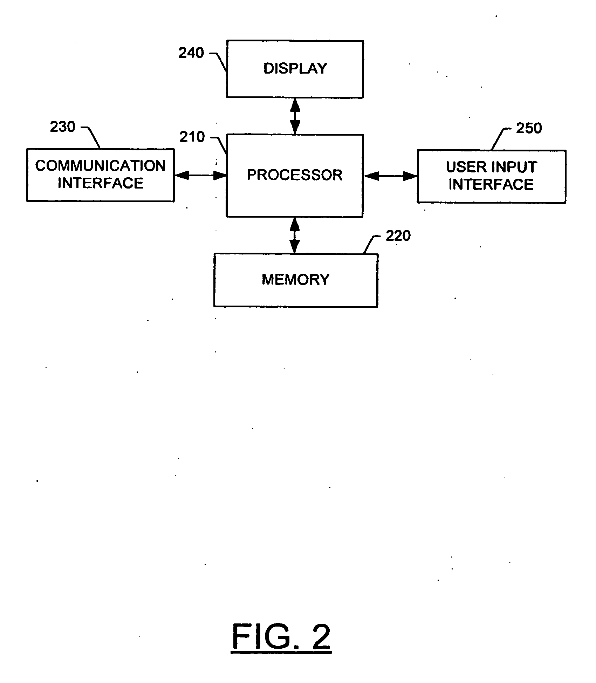

Reference is now made to Figure 2, which provides a block diagram of an entity capable of operating as an electronic device in accordance with one embodiment of the present invention. The entity capable of operating as an electronic device includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as an electronic device can generally include means, such as a processor **210** for performing or controlling the various functions of the entity.

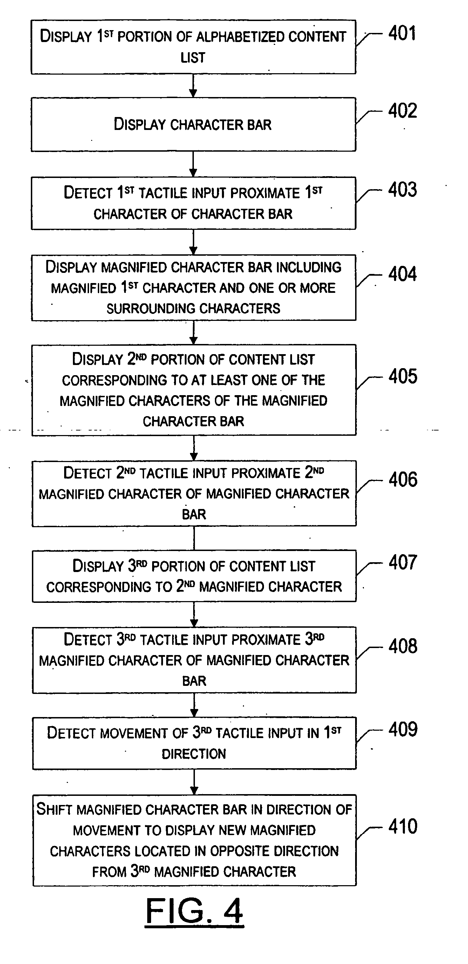

In particular, the processor **210** may be configured to perform the steps described below with regard to Figure 4 for manipulating a reference designator listing displayed on a touchscreen of the electronic device. For example, according to one embodiment of the present invention, the processor **210** may be configured to cause a reference designator listing including a plurality of ordered reference designators to be displayed on a touch sensitive input device of the electronic device, and to detect a tactile input on the touch sensitive input device proximate a location at which a first reference designator of the reference designator listing is displayed. In response, the processor **210** may further be configured to cause a magnified reference designator listing to be displayed, wherein the magnified reference designator listing includes a set of magnified reference designators including a magnified version of the first reference designator and of one or more reference designators surrounding the first reference designator and further to cause a portion of an ordered content list to be displayed, wherein the portion includes one or more ordered content elements corresponding to at least one of the magnified reference designators of the set of magnified reference designators.

In one embodiment, the processor **210** may be further configured to detect a tactile input on the touch sensitive input device proximate a location at which a first magnified reference designator of the set of magnified reference designators is displayed, and further to detect a movement of the tactile input in a first direction. In response, the processor **210** may be configured to translate the magnified reference designator listing, such that the magnified reference designator listing includes a different set of magnified reference designators including a magnified version of one or more reference designators of the reference designator listing located in the opposite direction from the first magnified reference character than the first direction.

In one embodiment, the processor is in communication with or includes memory **220,** such as volatile and/or non-volatile memory that stores content, data or the like. For example, the memory **220** typically stores content transmitted from, and/or received by, the entity. Also for example, the memory **220** typically stores software applications, instructions or the like for the processor to perform steps associated with operation of the entity in accordance with embodiments of the present invention. In particular, the memory **220** may store instructions for the processor **210** to perform the steps described above and below with regard to Figure 4 for manipulating a reference designator listing displayed on a touchscreen of the electronic device.

In addition to the memory **220**, the processor **210** can also be connected to at least one interface or other means for displaying, transmitting and/or receiving data, content or the like. In this regard, the interface(s) can include at least one communication interface **230** or other means for transmitting and/or receiving data, content or the like, as well as at least one user interface that can include a display **240** and/or a user input interface **250.** The user input interface, in turn, can comprise any of a number of devices allowing the entity to receive data from a user, such as a keypad, a touch display, a joystick or other input device.

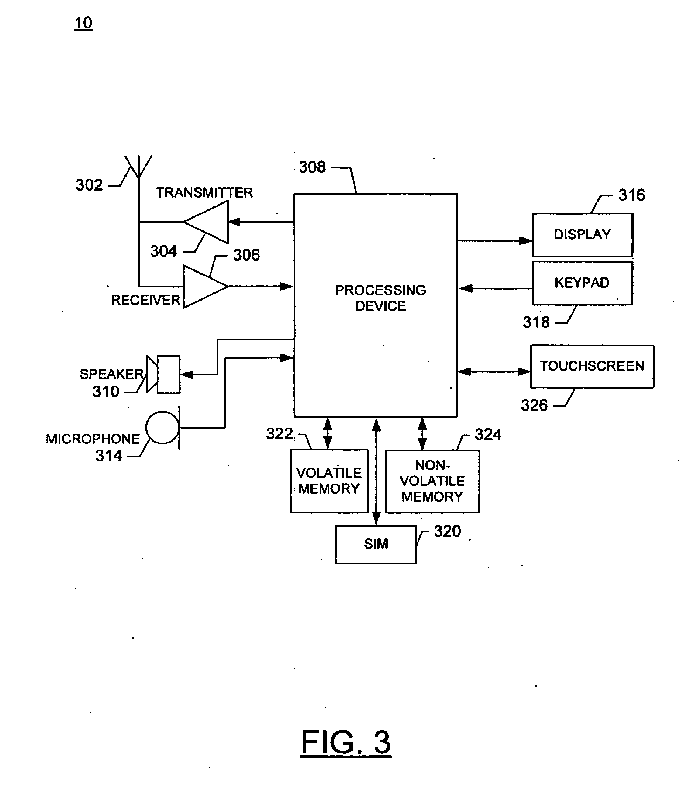

Reference is now made to Figure 3, which illustrates one type of electronic device that would benefit from embodiments of the present invention. As shown, the electronic device may be a mobile station **10,** and, in particular, a cellular telephone. It should be understood, however, that the mobile station illustrated and hereinafter described is merely illustrative of one type of electronic device that would benefit from the present invention and, therefore, should not be taken to limit the scope of the present invention. While several embodiments of the mobile station **10** are illustrated and will be hereinafter described for purposes of example, other types of mobile stations, such as personal digital assistants (PDAs), pagers, laptop computers, as well as other types of electronic systems including both mobile, wireless devices and fixed, wireline devices, can readily employ embodiments of the present invention.

The mobile station includes various means for performing one or more functions in accordance with embodiments of the present invention, including those more particularly shown and described herein. It should be understood, however, that the mobile station may include alternative means for performing one or more like functions, without departing from the spirit and scope of the present invention. More particularly, for example, as shown in Figure 3, in addition to an antenna **302,** the mobile station **10** includes a transmitter **304,** a receiver **306,** and an apparatus that includes means, such as a processing device **308,** e.g., a processor, controller or the like, that provides signals to and receives signals from the transmitter **304** and receiver **306,** respectively, and that performs the various other functions described below including, for example, the functions relating to manipulating a reference designator listing.

As discussed in more detail below with regard to Figure 4, in one embodiment, the processing device **308** may be configured to cause a reference designator listing including a plurality of ordered reference designators to be displayed on a touch sensitive input device of the mobile station **10,** and to detect a tactile input on the touch sensitive input device proximate a location at which a first reference designator of the reference designator listing is displayed. In response, the processing device **308** may further be configured to cause a magnified reference designator listing to be displayed, wherein the magnified reference designator listing includes a set of magnified reference designators including a magnified version of the first reference designator and of one or more reference designators surrounding the first reference designator and further to cause a portion of an ordered content list to be displayed, wherein the portion includes one or more ordered content elements corresponding to at least one of the magnified reference designators of the set of magnified reference designators.

In one embodiment, the processing device **308** may be further configured to detect a tactile input on the touch sensitive input device proximate a location at which a first magnified reference designator of the set of magnified reference designators is displayed, and further to detect a movement of the tactile input in a first direction. In response, the processing device **308** may be configured to translate the magnified reference designator listing, such that the magnified reference designator listing includes a different set of magnified reference designators including a magnified version of one or more reference designators of the reference designator listing located in the opposite direction from the first magnified reference character than the first direction.

As one of ordinary skill in the art would recognize, the signals provided to and received from the transmitter **304** and receiver **306,** respectively, may include signaling information in accordance with the air interface standard of the applicable cellular system and also user speech and/or user generated data. In this regard, the mobile station can be capable of operating with one or more air interface standards, communication protocols, modulation types, and access types. More particularly, the mobile station can be capable of operating in accordance with any of a number of second-generation (2G), 2.5G and/or third-generation (3G) communication protocols or the like. Further, for example, the mobile station can be capable of operating in accordance with any of a number of different wireless networking techniques, including Bluetooth, IEEE 802.11 WLAN (or Wi-Fi®), IEEE 802.16 WiMAX, ultra wideband (UWB), and the like.

It is understood that the processing device **308,** such as a processor, controller or other computing device, may include the circuitry required for implementing the video, audio, and logic functions of the mobile station and may be capable of executing application programs for implementing the functionality discussed herein. For example, the processing device may be comprised of various means including a digital signal processor device, a microprocessor device, and various analog to digital converters, digital to analog converters, and other support circuits. The control and signal processing functions of the mobile device are allocated between these devices according to their respective capabilities. The processing device **308** thus also includes the functionality to convolutionally encode and interleave message and data prior to modulation and transmission. Further, the processing device **308** may include the functionality to operate one or more software applications, which may be stored in memory. For example, the controller may be capable of operating a connectivity program, such as a conventional Web browser. The connectivity program may then allow the mobile station to transmit and receive Web content, such as according to HTTP and/or the Wireless Application Protocol (WAP), for example.

The mobile station may also comprise means such as a user interface including, for example, a conventional earphone or speaker **310,** a microphone **314,** and a display **316,** all of which are coupled to the processing device **308.** The user input interface, which allows the mobile device to receive data, can comprise any of a number of devices allowing the mobile device to receive data, such as a keypad **318,** a touch-sensitive input device, such as a touchscreen or touchpad **326,** a microphone **314,** or other input device. In embodiments including a keypad, the keypad can include the conventional numeric (0-9) and related keys (#, *), and other keys used for operating the mobile station and may include a full set of alphanumeric keys or set of keys that may be activated to provide a full set of alphanumeric keys. Although not shown, the mobile station may include a battery, such as a vibrating battery pack, for powering the various circuits that are required to operate the mobile station, as well as optionally providing mechanical vibration as a detectable output.

The mobile station can also include means, such as memory including, for example, a subscriber identity module (SIM) **320,** a removable user identity module (R-UIM) (not shown), or the like, which typically stores information elements related to a mobile subscriber. In addition to the SIM, the mobile device can include other memory. In this regard, the mobile station can include volatile memory **322,** as well as other non-volatile memory **324,** which can be embedded and/or may be removable. For example, the other non-volatile memory may be embedded or removable multimedia memory cards (MMCs), secure digital (SD) memory cards, Memory Sticks, EEPROM, flash memory, hard disk, or the like. The memory can store any of a number of pieces or amount of information and data used by the mobile device to implement the functions of the mobile station. For example, the memory can store an identifier, such as an international mobile equipment identification (IMEI) code, international mobile subscriber identification (IMSI) code, mobile device integrated services digital network (MSISDN) code, or the like, capable of uniquely identifying the mobile device.

The memory **322** and/or **324** can also store content. The memory **322** and/or **324** may, for example, store computer program code for an application and other computer programs. For example, in one embodiment of the present invention, the memory **322** and/or **324** may store computer program code for causing a reference designator listing including a plurality of ordered reference designators to be displayed on the touchscreen **326,** and detecting a tactile input on the touchscreen **326** proximate a location at which a first reference designator of the reference designator listing is displayed. The memory **322** and/or **324** may further store computer program code for causing, in response to detecting the tactile input, a magnified reference designator listing to be displayed, wherein the magnified reference designator listing includes a set of magnified reference designators including a magnified version of the first reference designator and of one or more reference designators surrounding the first reference designator. In addition, the memory **322** and/or **324** may store computer program code for further causing, in response to detecting the tactile input, a portion of an ordered content list to be displayed, wherein the portion includes one or more ordered content elements corresponding to at least one of the magnified reference designators of the set of magnified reference designators.

In another embodiment, the memory **322** and/or **324** may store computer program code for detecting a tactile input on the touch sensitive input device proximate a location at which a first magnified reference designator of the set of magnified reference designators is displayed, and detecting a movement of the tactile input in a first direction. The memory **322** and/or **324** may further store computer program code for translating, in response to detecting the tactile input and movement thereof, the magnified reference designator listing, such that the magnified reference designator listing includes a different set of magnified reference designators including a magnified version of one or more reference designators of the reference designator listing located in the opposite direction from the first magnified reference character than the first direction.

The apparatus, method and computer program product of embodiments of the present invention are primarily described in conjunction with mobile communications applications. It should be understood, however, that the apparatus, method and computer program product of embodiments of the present invention can be utilized in conjunction with a variety of other applications, both in the mobile communications industries and outside of the mobile communications industries. For example, the apparatus, method and computer program product of embodiments of the present invention can be utilized in conjunction with wireline and/or wireless network (e.g., Internet) applications.

### Method of Manipulating a Reference Designator Listing

Referring now to Figure 4, the operations are illustrated that may be taken in order to manipulate a reference designator listing in accordance with embodiments of the present invention. The following description assumes that the reference designators include letters of the alphabet and, therefore, that the reference designator listing comprises a character bar including those letters. It further assumes that the ordered content list includes an alphabetized list of content elements, such as contacts, music, audio and/or video files, or the like. As mentioned above, as one ordinary skill in the art will recognize, embodiments of the present invention are not limited to these types of reference designators or content elements. In contrast, the reference designators may include any reference (e.g., character, number, word, etc.) capable of being used to differentiate between content elements in a content list. For example the ordered content list may include a chronological list of music files or albums, wherein the reference designators include dates associated with the music file or album (e.g., "1997," "August of 1997," August 10, 1997," etc.). As another example, the ordered content list may include videos and/or still images listed by the name of the city, state and/or country in which they were captured. In this instance, the reference designator may be the city, state and/or country associated with the image, and the reference designator listing may include a list of those places. These and other examples of reference designators and content lists fall within the scope of embodiments of the present invention. As a result, the following description should not be taken in any way as limiting the scope of embodiments of the present invention.

Turning now to Figure 4, as shown, the process may begin at Block 401, when the electronic device, and in particular a processor or similar means operating on the electronic device, displays at least a first portion of an alphabetized content list including a plurality of alphabetized content elements on a touchscreen of the electronic device. As mentioned above, the alphabetized content elements may include the user's contacts, listed in alphabetical order by contact name; music files of the user's collection listed in alphabetical order by music file title, artist, or the like; video files and/or still images of the user's collection listed in alphabetical order by the video/image file name or title, the location at which the image/video was captured, or the like. Where the alphabetized content list includes too many content elements to display on the touchscreen at one time, only the first portion of the content list may be displayed (e.g., the content elements associated with the letter "A").

The electronic device (e.g., processor or similar means operating on the electronic device) may further, at Block 402, display a character bar including an alphabetized list of characters to be used for searching the alphabetized content list. The character bar may be displayed at any location on the touchscreen including, for example, along any side of the electronic device touchscreen (e.g., along the top, bottom, left or right of the screen). While the example character bar 110 of Figure 1, discussed above, is rectangular in shape and includes only one row of characters, as one of ordinary skill in the art will recognize, the character bar may be any shape or size including, for example, a circle, square, rectangular, or the like, and may have any number of rows of characters.

At some point thereafter, the user may attempt to select one of the characters of the character bar in order to display the portion of the alphabetized content list that corresponds to that letter. To do so, the user may touch the touchscreen using, for example, his or her finger, stylus, pen, pencil, or other selection device, around the location where the desired character is displayed. For example, as shown in Figure 1, the user may touch the screen around where the letter "K" is displayed in the character bar. The electronic device (e.g., processor or similar means operating on the electronic device) may, at Block 403, detect this tactile input on the touchscreen proximate the location at which the letter "K" is displayed (referred to hereinafter as "the first character"). As discussed above, because the letters of the character bar may be relatively small, while the user may have intended to select only the letter "K," he or she may have touched the screen not only where the letter "K" is displayed, but also where the surrounding letters "I" and/or "L" are displayed. According to one embodiment of the present invention, in order to determine which letter the user likely intended to select (i.e., "the first character"), the electronic device (e.g., processor or similar means operating on the electronic device) may determine which letter is displayed at the location at which the tactile input is more centrally located, and assume this is the letter the user intended to touch.

The electronic device (e.g., the processor or similar means operating on the electronic device) may detect the tactile input and determine its location via any number of techniques that are known to those of ordinary skill in the art. For example, the touchscreen may comprise two layers that are held apart by spacers and have an electrical current running therebetween. When a user touches the touchscreen, the two layers may make contact causing a change in the electrical current at the point of contact. The electronic device may note the change of the electrical current, as well as the coordinates of the point of contact.

Alternatively, wherein the touchscreen uses a capacitive, as opposed to a resistive, system to detect tactile input, the touchscreen may comprise a layer storing electrical charge. When a user touches the touchscreen, some of the charge from that layer is transferred to the user causing the charge on the capacitive layer to decrease. Circuits may be located at each corner of the touchscreen that measure the decrease in charge, such that the exact location of the tactile input can be calculated based on the relative differences in charge measured at each corner. Embodiments of the present invention can employ other types of touchscreens, such as a touchscreen that is configured to enable touch recognition by any of resistive, capacitive, infrared, strain gauge, surface wave, optical imaging, dispersive signal technology, acoustic pulse recognition or other techniques, and to then provide signals indicative of the location of the touch.

The touchscreen interface may be configured to receive an indication of an input in the form of a touch event at the touchscreen. As suggested above, the touch event may be defined as an actual physical contact between a selection device (e.g., a finger, stylus, pen, pencil, or other pointing device) and the touchscreen. Alternatively, a touch event may be defined as bringing the selection device in proximity to the touchscreen (e.g., hovering over a displayed object or approaching an object within a predefined distance).

In response to detecting the tactile input, the electronic device (e.g., processor or similar means operating on the electronic device) may, at Block 404, display a magnified version of the character bar that includes a set of magnified characters including a magnified version of the letter it is assumed the user was intending to touch (i.e., "the first character"), as well as one or more surrounding letters. In other words, the electronic device may zoom the character bar in to the letter it is assumed the user was attempting to select. An example of the magnified character bar 112 is shown in Figure 1, discussed above. Continuing with the example above, the magnified character bar may include the letters "I," "J," "K," "L," "M" and "N."

In addition, also in response to detecting the tactile input, the electronic device (e.g., processor or similar means operating on the electronic device) may, at Block 405, display a second portion of the alphabetized content list that includes content elements that correspond to at least one of the characters of the magnified character bar. In other words, according to one embodiment of the present invention, the content list may jump to the content elements that correspond to the letter it is assumed the user intended to touch (e.g., the letter "K").

The second portion of the alphabetized content list may start with the content elements that are associated with the first character (i.e., the letter it is assumed the user intended to touch - e.g., "K"). However, if there are no content elements that correspond to that character or letter, the second portion may start with content elements associated with one of the surrounding characters (e.g., "L"). For example, if the user touches the character bar at or near the location at which the letter "X" is displayed, but the user does not have any contacts whose name begins with the letter "X," the contact list, may jump to the contacts whose names begin with the letter "Y" or "Z."

In addition, content elements associated with more than one character may be displayed, depending upon the number of content elements associated with each character, the size of the display screen and the size of the displayed content elements. For example, if the user touches the character bar at or near the location at which the letter "R" is displayed, and the user has a lot of contacts whose names being with the letter "R," only contacts whose names begin with the letter "R" may be displayed. In contrast, if the user touches the screen proximate the location at which the letter "B" is displayed, and the user only has a few contacts whose names begin with the letter "B," contacts whose names begin with the letters "B" and "C" may be displayed.

The second portion may overlap the first portion. In other words, content elements that appear in the first portion (prior to jumping) may also be included in the second portion. For example, assuming user contacts whose names begin with the letters "A," "B" and "C" are all displayed when the user first opens his or her contact list. If the user were to then touch the character bar at or near the location at which the letter "C" is displayed, the contact list may jump to the contacts whose names begin with the letter "C," and display all contacts whose names begin, for example, with the letters "C," "D" and "E." In this case the first portion (i.e., contacts starting with the letters "A," "B" and "C") overlaps the second portion (i.e., contacts starting with the letters "C," "D," and "E").

Once the character bar has been magnified or zoomed, the user may be able to more accurately select the letter or character associated with the content elements he or she would like to view. For example, assume the user intended to jump to audio files whose name or title started with the letter "T." Because of the size of the unmagnified character bar and of his or her finger, he or she may have touched the touchscreen at the location where both letters "S" and "T" were displayed. Assume further that the electronic device interpreted the tactile input as selection of the letter "S" (and not "T") and, in response, displayed only music files starting with the letter "S." As described above, according to embodiments of the invention, in addition to jumping to the audio files of the content list that are associated with the letter "S," the electronic device (e.g., processor or similar means operating on the electronic device) zooms the character bar in at or near the location at which the user touched the screen (i.e., replaces the character bar with the magnified character bar including a magnified version of the selected letter and one or more surrounding letters). In order to then jump to audio files associated with the desired letter, which in this example is "T," the user can then touch the magnified character bar at or near the location at which the magnified character is displayed. Because the letter is magnified, it is less likely that the user will accidentally also touch a surrounding letter.

The electronic device (e.g., processor or similar means operating on the electronic device) may, at Block 406, detect a second tactile input associated with the user touching the touchscreen at or near the location at which one of the magnified characters is displayed (e.g., using any of the known techniques discussed above with regard to Block 403) and, in response, at Block 407, display a third portion of the alphabetized content list including one or more content elements associated with the selected magnified letter or character. As discussed above with regard to the first and second portions, the third portion may include content elements that are associated with only one or multiple characters, as well as content elements that were part of the first and/or second portions (i.e., the portions of the alphabetized content list described herein are not mutually exclusive).

In addition to the foregoing, the user may further wish to scroll the magnified character bar in order to have access to additional characters that can be used to navigate to a specific portion of the alphabetized content list. In order to do so, the user may touch the touchscreen (e.g., using his or her finger or other selection device) at or near the location at which one of the magnified characters is displayed and then move his or her finger in a first direction relative to the character bar. Depending upon where the character bar is displayed on the touchscreen as well as the shape of the character bar, the movement may be up, down, left, right, diagonal, or the like. The electronic device (e.g., processor or similar means operating on the electronic device) may detect the third tactile input (at Block 408), as well as the movement of the third tactile input in the first direction (at Block 409), using any of the known techniques discussed above with regard to Block 403.

In response to detecting the third tactile input and the movement thereof, the electronic device may shift or translate the magnified character bar, so that a new set of magnified characters are displayed, wherein the new set of magnified characters includes a magnified version of characters that are located in a direction from the selected magnified character that is based on the first direction (e.g., located in the same or opposite direction from the first direction). For example, assume that the character bar is of the shape and orientation of that shown in Figure 1, if the user touches the touchscreen at or near the location at which the letter "P" is displayed and then moves his or her finger up, then the new set of magnified characters displayed may include letters that are below the letter "P" (i.e., located in the opposite direction from the letter "P" than the direction of movement of the tactile input) (e.g., letters "Q," "R," "S," etc.). Similarly, if the magnified character bar were displayed along the top or bottom of the touchscreen, and the user moved his or her finger (or other selection device) to the left, then letters appearing to the right of the letter "P" (e.g., typically letters following "P" in the alphabet) may be included in the new set of magnified letters displayed in the magnified character bar. According to embodiments of the present invention, shifting or translating the magnified character bar may include, for example, jumping to the new location (i.e., immediately replacing the original or previous set of magnified characters with the new set of magnified characters), as well as a continuous movement to that new location (i.e., by displaying the magnified characters lying between the original or previous set of magnified characters and the new set).

In one embodiment, the speed of the movement detected may determine how far the magnified character bar jumps. For example, if the user moves his or her finger quickly, then the new set of magnified characters may include characters that are farther away from the original set than if the user moved his or her finger slowly (e.g., may jump from "E" to "W" in response to a fast movement, as opposed to only from "E" to "L" in response to a slow movement). Other characteristics may likewise be used for determining the extent of the movement within the magnified character bar (i.e., the distance between the original or previous set of magnified characters and the new set). For example, in order to scroll the character bar, the user may perform a series of taps in the first direction (i.e., instead of a steady movement along the touchscreen while applying continuous pressure), and the distance between and/or the number of taps may determine the acceleration of movement within the magnified character bar. Depending upon the distance the user moves his or her finger, the speed with which he or she moves that distance, and any other characteristic relating to the user's translation or scrolling; the new set of magnified letters may overlap the original set of magnified letters, or it may include an entirely different set of magnified characters.

While not shown, according to embodiments of the present invention, if after a certain predefined period of time, the user has not selected a magnified character or scrolled the magnified character bar, the electronic device (e.g., processor or similar means operating on the electronic device) may cause the character bar to revert back to its original, non-magnified size (e.g., as displayed in Block 402). Alternatively, or in addition, the user may cause the character bar to revert back to its original, non-magnified size by selecting a "cancel" button, or the equivalent thereof. In yet another embodiment, once the user has selected an element from the displayed ordered content list (e.g., a contact from the alphabetized contact list), the electronic device (e.g., processor or similar means) may, at that point, cause the character bar to revert to its original, non-magnified size.

As one of ordinary skill in the art will recognize, while Figure 4, and the foregoing description thereof, illustrates the user scrolling the magnified character bar (i.e., at Blocks 408 though 410) after he or she has first selected a magnified character from the magnified character bar for the purpose of jumping to content elements corresponding to the selected character (e.g., at Blocks 406 and 407), embodiments of the present invention are not limited to this particular order. In particular, according to embodiments of the present invention, a user may scroll the magnified character bar at any point in time after the magnified character bar has been displayed, regardless of whether he or she has selected one of the magnified characters. Embodiments of the present invention should, therefore, not be limited to the particular order illustrated in Figure 4 or described above in relation to Figure 4.

### Conclusion:

As described above and as will be appreciated by one skilled in the art, embodiments of the present invention may be configured as an apparatus and method. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as processor **210** discussed above with reference to Figure 2 or processing device **308** discussed above with regard to Figure 3, to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus (e.g., processor **210** of Figure 2 or processing device **308** of Figure 3) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus comprising:
means for causing a reference designator listing (110) comprising a plurality of ordered reference designators (114) to be displayed on a touch sensitive input device (100);
means for detecting a first tactile input on the touch sensitive input device proximate a location at which a first reference designator of the reference designator listing is displayed;
means for causing the reference designator listing (112) to be magnified, in response to detecting the first tactile input, the magnified reference designator listing comprising a set of magnified reference designators, wherein the set of magnified reference designators comprises a magnified version (116) of the first reference designator and of one or more reference designators surrounding the first reference designator;
means for causing a first portion (120) of an ordered content list to be displayed, in response to detecting the first tactile input, wherein the first portion comprises one or more ordered content elements corresponding to at least one of the magnified reference designators of the set of magnified reference designators;
means for detecting a second tactile input on the touch sensitive input device proximate a location at which a magnified reference designator of the set of magnified reference designators is displayed; and
means for causing a second portion (122) of the ordered content list to be displayed, displayed in place of the first portion of the ordered content list and in response to detecting the second tactile input, wherein the second portion comprises one or more ordered content elements corresponding to the magnified reference designator.

2. The apparatus of Claim 1, wherein the plurality of ordered reference designators comprises a plurality of alphabetized characters, and wherein the ordered content list comprises a plurality of alphabetized content elements.

3. The apparatus of Claim 1 or 2, comprising:
means for detecting a tactile input on the touch sensitive input device proximate a location at which a first magnified reference designator of the set of magnified reference designators is displayed;
means for detecting a movement of the tactile input in a first direction; and
means for translating the magnified reference designator listing, in response to detecting the movement of the tactile input, such that the magnified reference designator listing comprises a different set of magnified reference designators, said different set of magnified reference designators comprising a magnified version of one or more reference designators of the reference designator listing located in the opposite direction from the first magnified reference character than the first direction.

4. The apparatus of Claim 3, comprising:
means for determining a characteristic of the movement of the tactile input; and
means for selecting the different set of magnified reference designators, wherein a distance between the first magnified reference designator and the different set of magnified reference characters is based at least in part on the determined characteristic.

5. The apparatus of Claim 4, wherein the characteristic comprises speed.

6. The apparatus of Claim 1, 2, 3, 4, or 5, wherein the ordered content list comprises a list of contacts, a list of audio files, a list of images or a list of video files.

7. A method comprising:
causing a reference designator listing (110) comprising a plurality of ordered reference designators (114) to be displayed on a touch sensitive input device (100);
detecting a first tactile input on the touch sensitive input device proximate a location at which a first reference designator of the reference designator listing is displayed;
causing the reference designator listing (112) to be magnified, in response to detecting the first tactile input, the magnified reference designator listing comprising a set of magnified reference designators, wherein the set of magnified reference designators comprises a magnified version (116) of the first reference designator and of one or more reference designators surrounding the first reference designator;
causing a first portion (120) of an ordered content list to be displayed, in response to detecting the first tactile input, wherein the first portion comprises one or more ordered content elements corresponding to at least one of the magnified reference designators of the set of magnified reference designators;
detecting a second tactile input on the touch sensitive input device proximate a location at which a magnified reference designator of the set of magnified reference designators is displayed; and
causing a second portion (122) of the ordered content list to be displayed, displayed in place of the first portion of the ordered content list and in response to detecting the second tactile input, wherein the second portion comprises one or more ordered content elements corresponding to the magnified reference designator.

8. The method of Claim 7, wherein the plurality of ordered reference designators comprises a plurality of alphabetized characters, and wherein the ordered content list comprises a plurality of alphabetized content elements.

9. The method of Claim 7 or 8 further comprising:
detecting a tactile input on the touch sensitive input device proximate a location at which a first magnified reference designator of the set of magnified reference designators is displayed;
detecting a movement of the tactile input in a first direction; and
translating the magnified reference designator listing, in response to detecting the movement of the tactile input, such that the magnified reference designator listing comprises a different set of magnified reference designators, said different set of magnified reference designators comprising a magnified version of one or more reference designators of the reference designator listing located in the opposite direction from the first magnified reference character than the first direction.

10. The method of Claim 9 further comprising:
determining a characteristic of the movement of the tactile input; and
selecting the different set of magnified reference designators, wherein a distance between the first magnified reference designator and the different set of magnified reference characters is based at least in part on the determined characteristic.

11. The method of Claim 10, wherein the characteristic comprises speed.

12. The method of Claim 7, 8, 9, 10, or 11, wherein the ordered content list comprises a list of contacts, a list of audio files, a list of images or a list of video files.

13. A computer program comprising:
a portion, executable by a processor, for causing a reference designator listing (110) comprising a plurality of ordered reference designators (114) to be displayed on a touch sensitive input device;
a portion, executable by a processor, for detecting a first tactile input on the touch sensitive input device proximate a location at which a first reference designator of the reference designator listing is displayed;
a portion, executable by a processor, for causing the reference designator listing (112) to be magnified, in response to detecting the first tactile input, the magnified reference designator listing comprising a set of magnified reference designators, wherein the set of magnified reference designators comprises a magnified version (116) of the first reference designator and of one or more reference designators surrounding the first reference designator;
a portion, executable by a processor, for causing a first portion (120) of an ordered content list to be displayed, in response to detecting the first tactile input, wherein the first portion comprises one or more ordered content elements corresponding to at least one of the magnified reference designators of the set of magnified reference designators;
a portion, executable by a processor, for detecting a second tactile input on the touch sensitive input device proximate a location at which a magnified reference designator of the set of magnified reference designators is displayed; and
a portion, executable by a processor, for causing a second portion (122) of the ordered content list to be displayed, displayed in place of the first portion of the ordered content list and in response to detecting the second tactile input, wherein the second portion comprises one or more ordered content elements corresponding to the magnified reference designator.

14. The computer program of Claim 13, wherein the computer program is embodied as a computer program product comprising at least one computer-readable storage medium having computer-executable program code instructions stored therein, the computer-executable program code instructions comprising the executable portions.

## Patentansprüche

1. Vorrichtung, Folgendes umfassend:
ein Mittel zum Bewirken, dass eine Referenzkennungsauflistung (110), die mehrere sortierte Referenzkennungen (114) umfasst, auf einer berührungsempfindlichen Eingabevorrichtung (100) angezeigt wird;
ein Mittel zum Detektieren einer ersten taktilen Eingabe auf der berührungsempfindlichen Eingabevorrichtung in der Nähe einer Position, an der eine erste Referenzkennung aus der Referenzkennungsauflistung angezeigt wird;
ein Mittel zum Bewirken, dass die Referenzkennungsauflistung (112) vergrößert wird, und dies in Reaktion auf die Detektion der ersten taktilen Eingabe, wobei die vergrößerte Referenzkennungsauflistung einen Satz vergrößerter Referenzkennungen umfasst, wobei der Satz vergrößerter Referenzkennungen eine vergrößerte Version (116) der ersten Referenzkennung und eine oder mehrere Referenzkennungen, die die erste Referenzkennung umgeben, umfasst;
ein Mittel zum Bewirken, dass ein erster Abschnitt (120) einer sortierten Inhaltliste angezeigt wird, und dies in Reaktion auf die Detektion der ersten taktilen Eingabe, wobei der erste Abschnitt ein oder mehrere sortierte Inhaltelemente umfasst, die wenigstens einer der vergrößerten Referenzkennungen aus dem Satz vergrößerter Referenzkennungen zugeordnet sind;
ein Mittel zum Detektieren einer zweiten taktilen Eingabe auf der berührungsempfindlichen Eingabevorrichtung in der Nähe einer Position, an der eine vergrößerte Referenzkennung aus dem Satz vergrößerter Referenzkennungen angezeigt wird; und
ein Mittel zum Bewirken, dass ein zweiter Abschnitt (122) der sortierten Inhaltliste angezeigt wird, wobei er anstelle des ersten Abschnitts der sortierten Inhaltliste und in Reaktion auf die Detektion der zweiten taktilen Eingabe angezeigt wird und wobei der zweite Abschnitt ein oder mehrere sortierte Inhaltelemente umfasst, die der vergrößerten Referenzkennung zugeordnet sind.

2. Vorrichtung nach Anspruch 1, wobei die mehreren sortierten Referenzkennungen mehrere alphabetisch angeordnete Buchstaben umfassen und wobei die sortierte Inhaltliste mehrere alphabetisch angeordnete Inhaltelemente umfasst.

3. Vorrichtung nach Anspruch 1 oder 2, Folgendes umfassend:
ein Mittel zum Detektieren einer taktilen Eingabe auf der berührungsempfindlichen Eingabevorrichtung in der Nähe einer Position, an der eine erste vergrößerte Referenzkennung aus dem Satz vergrößerter Referenzkennungen angezeigt wird;
ein Mittel zum Detektieren einer Bewegung der taktilen Eingabe in einer ersten Richtung; und
ein Mittel zum Verschieben der vergrößerten Referenzkennungsauflistung in Reaktion auf die Detektion der Bewegung der taktilen Eingabe, und dies derart, dass die vergrößerte Referenzkennungsauflistung einen anderen Satz vergrößerter Referenzkennungen umfasst, wobei der andere Satz vergrößerter Referenzkennungen eine vergrößerte Version einer oder mehrerer Referenzkennungen aus der Referenzkennungsauflistung umfasst, die sich vom ersten vergrößerten Referenzbuchstaben ausgehend in der zur ersten Richtung entgegengesetzten Richtung befinden.

4. Vorrichtung nach Anspruch 3, Folgendes umfassend:
ein Mittel zum Feststellen einer Eigenschaft der Bewegung der taktilen Eingabe; und
ein Mittel zum Auswählen des anderen Satzes vergrößerter Referenzkennungen, wobei ein Abstand zwischen der ersten vergrößerten Referenzkennung und dem anderen Satz vergrößerter Referenzbuchstaben wenigstens teilweise auf der festgestellten Eigenschaft basiert.

5. Vorrichtung nach Anspruch 4, wobei die Eigenschaft eine Geschwindigkeit umfasst.

6. Vorrichtung nach Anspruch 1, 2, 3, 4 oder 5, wobei die sortierte Inhaltliste eine Liste von Kontakten, eine Liste von Audiodateien, eine Liste von Bildern oder eine Liste von Videodateien umfasst.

7. Verfahren, Folgendes umfassend:
Bewirken, dass eine Referenzkennungsauflistung (110), die mehrere sortierte Referenzkennungen (114) umfasst, auf einer berührungsempfindlichen Eingabevorrichtung (100) angezeigt wird;
Detektieren einer ersten taktilen Eingabe auf der berührungsempfindlichen Eingabevorrichtung in der Nähe einer Position, an der eine erste Referenzkennung aus der Referenzkennungsauflistung angezeigt wird;
Bewirken, dass die Referenzkennungsauflistung (112) vergrößert wird, und dies in Reaktion auf die Detektion der ersten taktilen Eingabe, wobei die vergrößerte Referenzkennungsauflistung einen Satz vergrößerter Referenzkennungen umfasst, wobei der Satz vergrößerter Referenzkennungen eine vergrößerte Version (116) der ersten Referenzkennung und eine oder mehrere Referenzkennungen, die die erste Referenzkennung umgeben, umfasst;
Bewirken, dass ein erster Abschnitt (120) einer sortierten Inhaltliste angezeigt wird, und dies in Reaktion auf die Detektion der ersten taktilen Eingabe, wobei der erste Abschnitt ein oder mehrere sortierte Inhaltelemente umfasst, die wenigstens einer der vergrößerten Referenzkennungen aus dem Satz vergrößerter Referenzkennungen zugeordnet sind;
Detektieren einer zweiten taktilen Eingabe auf der berührungsempfindlichen Eingabevorrichtung in der Nähe einer Position, an der eine vergrößerte Referenzkennung aus dem Satz vergrößerter Referenzkennungen angezeigt wird; und
Bewirken, dass ein zweiter Abschnitt (122) der sortierten Inhaltliste angezeigt wird, wobei er anstelle des ersten Abschnitts der sortierten Inhaltliste und in Reaktion auf die Detektion der zweiten taktilen Eingabe angezeigt wird und wobei der zweite Abschnitt ein oder mehrere sortierte Inhaltelemente umfasst, die der vergrößerten Referenzkennung zugeordnet sind.

8. Verfahren nach Anspruch 7, wobei die mehreren sortierten Referenzkennungen mehrere alphabetisch angeordnete Buchstaben umfassen und wobei die sortierte Inhaltliste mehrere alphabetisch angeordnete Inhaltelemente umfasst.

9. Verfahren nach Anspruch 7 oder 8, außerdem Folgendes umfassend:
Detektieren einer taktilen Eingabe auf der berührungsempfindlichen Eingabevorrichtung in der Nähe einer Position, an der eine erste vergrößerte Referenzkennung aus dem Satz vergrößerter Referenzkennungen angezeigt wird;
Detektieren einer Bewegung der taktilen Eingabe in einer ersten Richtung;
und
Verschieben der vergrößerten Referenzkennungsauflistung in Reaktion auf die Detektion der Bewegung der taktilen Eingabe, und dies derart, dass die vergrößerte Referenzkennungsauflistung einen anderen Satz vergrößerter Referenzkennungen umfasst, wobei der andere Satz vergrößerter Referenzkennungen eine vergrößerte Version einer oder mehrerer Referenzkennungen aus der Referenzkennungsauflistung umfasst, die sich vom ersten vergrößerten Referenzbuchstaben ausgehend in der zur ersten Richtung entgegengesetzten Richtung befinden.

10. Verfahren nach Anspruch 9, außerdem Folgendes umfassend:
Feststellen einer Eigenschaft der Bewegung der taktilen Eingabe; und
Auswählen des anderen Satzes vergrößerter Referenzkennungen, wobei ein Abstand zwischen der ersten vergrößerten Referenzkennung und dem anderen Satz vergrößerter Referenzbuchstaben wenigstens teilweise auf der festgestellten Eigenschaft basiert.

11. Verfahren nach Anspruch 10, wobei die Eigenschaft eine Geschwindigkeit umfasst.

12. Verfahren nach Anspruch 7, 8, 9, 10 oder 11, wobei die sortierte Inhaltliste eine Liste von Kontakten, eine Liste von Audiodateien, eine Liste von Bildern oder eine Liste von Videodateien umfasst.

13. Computerprogramm, Folgendes umfassend:
einen Abschnitt, der durch einen Prozessor ausführbar ist, zum Bewirken, dass eine Referenzkennungsauflistung (110), die mehrere sortierte Referenzkennungen (114) umfasst, auf einer berührungsempfindlichen Eingabevorrichtung angezeigt wird;
einen Abschnitt, der durch einen Prozessor ausführbar ist, zum Detektieren einer ersten taktilen Eingabe auf der berührungsempfindlichen Eingabevorrichtung in der Nähe einer Position, an der eine erste Referenzkennung aus der Referenzkennungsauflistung angezeigt wird;
einen Abschnitt, der durch einen Prozessor ausführbar ist, zum Bewirken, dass die Referenzkennungsauflistung (112) vergrößert wird, und dies in Reaktion auf die Detektion der ersten taktilen Eingabe, wobei die vergrößerte Referenzkennungsauflistung einen Satz vergrößerter Referenzkennungen umfasst, wobei der Satz vergrößerter Referenzkennungen eine vergrößerte Version (116) der ersten Referenzkennung und eine oder mehrere Referenzkennungen, die die erste Referenzkennung umgeben, umfasst;
einen Abschnitt, der durch einen Prozessor ausführbar ist, zum Bewirken, dass ein erster Abschnitt (120) einer sortierten Inhaltliste angezeigt wird, und dies in Reaktion auf die Detektion der ersten taktilen Eingabe, wobei der erste Abschnitt ein oder mehrere sortierte Inhaltelemente umfasst, die wenigstens einer der vergrößerten Referenzkennungen aus dem Satz vergrößerter Referenzkennungen zugeordnet sind;
einen Abschnitt, der durch einen Prozessor ausführbar ist, zum Detektieren einer zweiten taktilen Eingabe auf der berührungsempfindlichen Eingabevorrichtung in der Nähe einer Position, an der eine vergrößerte Referenzkennung aus dem Satz vergrößerter Referenzkennungen angezeigt wird; und
einen Abschnitt, der durch einen Prozessor ausführbar ist, zum Bewirken, dass ein zweiter Abschnitt (122) der sortierten Inhaltliste angezeigt wird, wobei er anstelle des ersten Abschnitts der sortierten Inhaltliste und in Reaktion auf die Detektion der zweiten taktilen Eingabe angezeigt wird und wobei der zweite Abschnitt ein oder mehrere sortierte Inhaltelemente umfasst, die der vergrößerten Referenzkennung zugeordnet sind.

14. Computerprogramm nach Anspruch 13, wobei das Computerprogramm als ein Computerprogrammprodukt ausgeführt ist, das wenigstens ein computerlesbares Speichermedium umfasst, auf dem durch einen Computer ausführbare Programmcodeanweisungen gespeichert sind, wobei die computerausführbaren Programmcodeanweisungen die ausführbaren Abschnitte umfassen.

## Revendications

1. Dispositif comportant :
un moyen pour amener une liste de désignateurs de référence (110) comportant une pluralité de désignateurs de référence ordonnancés (114) à être affichée sur un dispositif d'entrée tactile (100) ;
un moyen pour détecter une première entrée tactile sur le dispositif d'entrée tactile, à proximité d'un emplacement au niveau duquel un premier désignateur de référence de la liste de désignateurs de référence est affiché ;
un moyen pour amener la liste de désignateurs de référence (112) à être agrandie, en réponse à la détection de la première entrée tactile, la liste de désignateurs de référence agrandie comportant un ensemble de désignateurs de référence agrandis, dans lequel l'ensemble de désignateurs de référence agrandis comporte une version agrandie (116) du premier désignateur de référence et d'un ou plusieurs désignateurs de référence aux alentours du premier désignateur de référence ;
un moyen pour amener une première partie (120) d'une liste de contenus ordonnancés à être affichée, en réponse à la détection de la première entrée tactile, dans lequel la première partie comporte un ou plusieurs éléments de contenu ordonnancés correspondant à au moins l'un des désignateurs de référence agrandis de l'ensemble de désignateurs de référence agrandis ;
un moyen pour détecter une seconde entrée tactile sur le dispositif d'entrée tactile, à proximité d'un emplacement au niveau duquel un désignateur de référence agrandi de l'ensemble de désignateurs de référence agrandis est affiché ; et
un moyen pour amener une seconde partie (122) de la liste de contenus ordonnancés à être affichée, laquelle est affichée à la place de la première partie de la liste de contenus ordonnancés et en réponse à la détection de la seconde entrée tactile, dans lequel la seconde partie comporte un ou plusieurs éléments de contenu ordonnancés correspondant au désignateur de référence agrandi.

2. Dispositif selon la revendication 1, dans lequel la pluralité de désignateurs de référence ordonnancés comporte une pluralité de caractères alphabétiques, et dans lequel la liste de contenus ordonnancés comporte une pluralité d'éléments de contenu alphabétiques.

3. Dispositif selon la revendication 1 ou 2, comportant :
un moyen pour détecter une entrée tactile sur le dispositif d'entrée tactile, à proximité d'un emplacement au niveau duquel un premier désignateur de référence agrandi de l'ensemble de désignateurs de référence agrandis est affiché ;
un moyen pour détecter un mouvement de l'entrée tactile dans une première direction ; et
un moyen pour translater la liste de désignateurs de référence agrandie, en réponse à la détection du mouvement de l'entrée tactile, de sorte que la liste de désignateurs de référence agrandie comporte un ensemble distinct de désignateurs de référence agrandis, ledit ensemble distinct de désignateurs de référence agrandis comportant une version agrandie d'un ou plusieurs désignateurs de référence de la liste de désignateurs de référence localisée dans la direction opposée, à partir du premier caractère de référence agrandi, par rapport à la première direction.

4. Dispositif selon la revendication 3, comportant :
un moyen pour déterminer une caractéristique du mouvement de l'entrée tactile ; et
un moyen pour sélectionner l'ensemble distinct de désignateurs de référence agrandis, dans lequel une distance entre le premier désignateur de référence agrandi et l'ensemble distinct de caractères de référence agrandis est basée au moins en partie sur la caractéristique déterminée.

5. Dispositif selon la revendication 4, dans lequel la caractéristique comporte une vitesse.

6. Dispositif selon la revendication 1, 2, 3, 4, ou 5, dans lequel la liste de contenus ordonnancés comporte une liste de contacts, une liste de fichiers audio, une liste d'images ou une liste de fichiers vidéo.

7. Procédé comportant les étapes suivantes consistant à :
amener une liste de désignateurs de référence (110) comportant une pluralité de désignateurs de référence ordonnancés (114) à être affichée sur un dispositif d'entrée tactile (100) ;
détecter une première entrée tactile sur le dispositif d'entrée tactile, à proximité d'un emplacement au niveau duquel un premier désignateur de référence de la liste de désignateurs de référence est affiché ;
amener la liste de désignateurs de référence (112) à être agrandie, en réponse à la détection de la première entrée tactile, la liste de désignateurs de référence agrandie comportant un ensemble de désignateurs de référence agrandis, dans lequel l'ensemble de désignateurs de référence agrandis comporte une version agrandie (116) du premier désignateur de référence et d'un ou plusieurs désignateurs de référence aux alentours du premier désignateur de référence ;
amener une première partie (120) d'une liste de contenus ordonnancés à être affichée, en réponse à la détection de la première entrée tactile, dans lequel la première partie comporte un ou plusieurs éléments de contenu ordonnancés correspondant à au moins l'un des désignateurs de référence agrandis de l'ensemble de désignateurs de référence agrandis ;
détecter une seconde entrée tactile sur le dispositif d'entrée tactile, à proximité d'un emplacement au niveau duquel un désignateur de référence agrandi de l'ensemble de désignateurs de référence agrandis est affiché ; et
amener une seconde partie (122) de la liste de contenus ordonnancés à être affichée, laquelle est affichée à la place de la première partie de la liste de contenus ordonnancés et en réponse à la détection de la seconde entrée tactile, dans lequel la seconde partie comporte un ou plusieurs éléments de contenu ordonnancés correspondant au désignateur de référence agrandi.

8. Procédé selon la revendication 7, dans lequel la pluralité de désignateurs de référence ordonnancés comporte une pluralité de caractères alphabétiques, et dans lequel la liste de contenus ordonnancés comporte une pluralité d'éléments de contenu alphabétiques.

9. Procédé selon la revendication 7 ou 8 comportant en outre :
détecter une entrée tactile sur le dispositif d'entrée tactile, à proximité d'un emplacement au niveau duquel un premier désignateur de référence agrandi de l'ensemble de désignateurs de référence agrandis est affiché ;
détecter un mouvement de l'entrée tactile dans une première direction ; et
translater la liste de désignateurs de référence agrandie, en réponse à la détection du mouvement de l'entrée tactile, de sorte que la liste de désignateurs de référence agrandie comporte un ensemble distinct de désignateurs de référence agrandis, ledit ensemble distinct de désignateurs de référence agrandis comportant une version agrandie d'un ou plusieurs désignateurs de référence de la liste de désignateurs de référence localisée dans la direction opposée, à partir du premier caractère de référence agrandi, par rapport à la première direction.

10. Procédé selon la revendication 9 comportant en outre :
déterminer une caractéristique du mouvement de l'entrée tactile ; et
sélectionner l'ensemble distinct de désignateurs de référence agrandis, dans lequel une distance entre le premier désignateur de référence agrandi et l'ensemble distinct de caractères de référence agrandis est basée au moins en partie sur la caractéristique déterminée.

11. Procédé selon la revendication 10, dans lequel la caractéristique comporte une vitesse.

12. Procédé selon la revendication 7, 8, 9, 10, ou 11, dans lequel la liste de contenus ordonnancés comporte une liste de contacts, une liste de fichiers audio, une liste d'images ou une liste de fichiers vidéo.

13. Programme informatique comportant :
une partie, exécutable par un processeur, pour amener une liste de désignateurs de référence (110) comportant une pluralité de désignateurs de référence ordonnancés (114) à être affichée sur un dispositif d'entrée tactile ;
une partie, exécutable par un processeur, pour détecter une première entrée tactile sur le dispositif d'entrée tactile, à proximité d'un emplacement au niveau duquel un premier désignateur de référence de la liste de désignateurs de référence est affiché ;
une partie, exécutable par un processeur, pour amener la liste de désignateurs de référence (112) à être agrandie, en réponse à la détection de la première entrée tactile, la liste de désignateurs de référence agrandie comportant un ensemble de désignateurs de référence agrandis, dans lequel l'ensemble de désignateurs de référence agrandis comporte une version agrandie (116) du premier désignateur de référence et d'un ou plusieurs désignateurs de référence aux alentours du premier désignateur de référence ;
une partie, exécutable par un processeur, pour amener une première partie (120) d'une liste de contenus ordonnancés à être affichée, en réponse à la détection de la première entrée tactile, dans lequel la première partie comporte un ou plusieurs éléments de contenu ordonnancés correspondant à au moins l'un des désignateurs de référence agrandis de l'ensemble de désignateurs de référence agrandis ;
une partie, exécutable par un processeur, pour détecter une seconde entrée tactile sur le dispositif d'entrée tactile, à proximité d'un emplacement au niveau duquel un désignateur de référence agrandi de l'ensemble de désignateurs de référence agrandis est affiché ; et
une partie, exécutable par un processeur, pour amener une seconde partie (122) de la liste de contenus ordonnancés à être affichée, laquelle est affichée à la place de la première partie de la liste de contenus ordonnancés et en réponse à la détection de la seconde entrée tactile, dans lequel la seconde partie comporte un ou plusieurs éléments de contenu ordonnancés correspondant au désignateur de référence agrandi.

14. Programme informatique selon la revendication 13, dans lequel le programme informatique est intégré sous la forme d'un produit-programme informatique comportant au moins un support de stockage lisible par ordinateur présentant des instructions de code de programme informatique exécutables par ordinateur stockées dans celui-ci, les instructions de code de programme informatique exécutables par ordinateur comportant les parties exécutables.
